# EUROPÄISCHE PATENTSCHRIFT

(11) **EP 4 197 053 B1**
(45) Veröffentlichungstag und Bekanntmachung des Hinweises auf die Patenterteilung: **01.05.2024**
(21) Anmeldenummer: 22813430.0
(22) Anmeldetag: 27.10.2022
(51) Int. Cl.: H01M 10/625, B60L 50/64

(54) **LADEVERFAHREN, BRANDSCHUTZVORRICHTUNG UND LADESTATION FÜR EIN ELEKTROFAHRZEUG**
CHARGING METHOD, FIRE-PROTECTION DEVICE AND CHARGING STATION FOR AN ELECTRIC VEHICLE
PROCÉDÉ DE CHARGE, DISPOSITIF DE PROTECTION CONTRE L'INCENDIE ET STATION DE CHARGE POUR VÉHICULE ÉLECTRIQUE

(30) Priorität: 05.11.2021 DE 102021212477; 05.11.2021 DE 202021106068 U
(43) Veröffentlichungstag der Anmeldung: 21.06.2023
(73) Patentinhaber: Ruoff Work & Life GmbH & Co. KG, 71111 Waldenbuch (DE)
(72) Erfinder: RUOFF, Michael, 71111 Waldenbuch (DE); GAJSEK, Miroslav, 70794 Filderstadt (DE)
(74) Vertreter: Kohler Schmid Möbus Patentanwälte
(86) Internationale Anmeldenummer: PCT/EP2022/080092
(87) Internationale Veröffentlichungsnummer: WO 2023/078776

(56) Entgegenhaltungen:
- EP-B1- 3 607 611
- CN-U- 214 428 739
- US-A1- 2010 136 391
- US-A1- 2016 204 483

## Beschreibung

### Hintergrund der Erfindung

Die Erfindung betrifft ein Verfahren zum Laden einer Batterie eines Elektrofahrzeugs, wobei die Batterie wenigstens eine in einem Aufnahmeraum angeordnete Batteriezelle und wenigstens einen Kanal aufweist, wobei eine Kanalwand, in der wenigstens ein Berstbereich ausgebildet ist, den Kanal und den Aufnahmeraum voneinander trennt. Die Erfindung betrifft ferner eine Brandschutzvorrichtung für ein Elektrofahrzeug mit einer solchen Batterie. Weiterhin betrifft die Erfindung eine Ladestation mit einer Ladevorrichtung zum Zuführen von elektrischer Energie zu der Batterie eines Elektrofahrzeugs.

Eine Batterie der vorgenannten Art ist aus EP 3 607 611 B1 oder US 2010/0136391 A1 bekannt.

Es ist grundsätzlich bekannt, dass das - insbesondere schnelle - Laden von Batterien mit einer gewissen Gefahr verbunden ist, dass Batteriezellen einen Defekt erleiden und möglicherweise sogar in Brand geraten. Bei Traktionsbatterien von Elektrofahrzeugen ist dies mit hohen Sachschäden verbunden. Insbesondere wenn das Elektrofahrzeug an oder in einem Gebäude geladen wird, besteht zudem eine Gefahr für Leib und Leben von Personen in dem Gebäude.

Eine aus DE 10 2018 221 942 A1 bekannte Batterie weist ein Zellgehäuse zur Aufnahme von Batteriezellen, umfassend eine Gehäuseoberseite, eine Gehäuseunterseite, einen zwischen der Gehäuseoberseite und der Gehäuseunterseite angeordneten Hohlraum zur Aufnahme eines Wärmaustauschmediums und einen innerhalb des Zellgehäuses angeordneten Berstbereich auf. Der Berstbereich ist derart ausgestaltet und innerhalb des Zellgehäuses angeordnet, dass zumindest ein Teil des innerhalb des Zellgehäuses anordenbaren Wärmeaustauschmediums im Falle eines Entflammens einer innerhalb des Zellgehäuses angeordneten Batteriezelle definiert durch den Berstbereich austreten und zur entflammten Batteriezelle gelangen kann. Dadurch soll eine Löschwirkung auf die entflammte Batteriezelle maximiert werden.

DE 10 2018 125 103 A1 beschreibt ein Fahrzeug mit einem Hochvoltspeicher, der ein Hochvoltspeichergehäuse aufweist, in dem mehrere elektrische Speicherzellen angeordnet sind. Am Fahrzeug ist ein Löschzugang vorgesehen, der dazu vorgesehen und bestimmt ist, in einem Brandfall oder bei Brandgefahr ein Zuführen von Feuerlöschmittel zu dem Hochvoltspeichergehäuse und/oder in das Innere des Hochvoltspeichergehäuses zu ermöglichen. Der Löschzugang ist bei ordnungsgemäßem Zustand des Hochvoltspeichers durch ein Abdeckelement das an einer Außenseite des Fahrzeugs angeordnet ist, verschlossen oder abgedeckt. Über den Löschzugang kann in Ausnahmesituationen, in denen die Gefahr eines Brandes des Hochvoltspeichers besteht oder ein Brand vorliegt, gezielt Feuerlöschmittel zu dem Hochvoltspeichergehäuse geleitet bzw. gegen das Hochvoltspeichergehäuse gespritzt oder in das Hochvoltspeichergehäuse eingeleitet bzw. eingespritzt werden.

Weiterhin ist es grundsätzlich bekannt, dass Batterien nur in einem bestimmten Temperaturbereich schnell und vollständig geladen werden können. Dem kann durch Temperieren der Batterie beim Ladevorgang Rechnung getragen werden.

Beispielsweise aus EP 3 480 897 B1 ist eine Ladesäule für ein Elektrofahrzeug bekannt. Die Ladesäule umfasst einen Ladestecker zum Aufladen des Elektrofahrzeugs sowie einen mit dem Elektrofahrzeug verbindbaren Medienstecker zum Abführen von Wärme aus einem fahrzeugseitigen Temperierungskreislauf des Elektrofahrzeugs unter Vermittlung eines mittels des Mediensteckers zu- und abführbaren Kühlmediums. Diese Ladesäule zeichnet sich dadurch aus, dass dem Elektrofahrzeug mittels des Mediensteckers auch Wärme unter Vermittlung eines mittels des Mediensteckers zu- und abführbaren Heizmediums zuführbar ist.

Eine ähnliche Ladestation ist aus DE 10 2018 125 159 A1 bekannt.

Die vorgenannten Druckschriften zum Stand der Technik beschreiben zum einen Lösungen, die bei der aktiven Brandbekämpfung genutzt werden können, um Löschmittel an die richtigen Stellen im Fahrzeug zu leiten. Zum anderen werden Systeme beschrieben, die einen Kühlkreislauf nutzen, um eine Temperaturregelung bei einem Ladevorgang zu ermöglichen. Ein unmittelbares Löschereignis im Brandfall wird durch diese Systeme jedoch nicht bewirkt.

CN 108237927 A beschreibt eine Ladesäule für ein Elektrofahrzeug. Mittels der Ladesäule kann eine Batterie des Elektrofahrzeugs geladen werden, zudem können ein Fahrgastraum und die Batterie beheizt oder gekühlt werden. Hierzu wird Luft aus der Batterie durch einen Wärmetauscher der Ladesäule geführt und zurück in die Batterie geleitet. Die Ladesäule ermöglicht es auch, die Zusammensetzung der aus der Batterie abgezogenen Luft mittels eines Massenspektrometers zu bestimmen. Je nach Anteil der aufgefundenen Bestandteile kann auf das Vorhandensein von Wasser in der Batterie, eine Elektrolyt-Leckage oder eine Überhitzung geschlossen werden. Wenn die Konzentration thermischer Spaltprodukte einen Grenzwert überschreitet, was für eine Überhitzung spricht, wird Feuerlöschmittel in die Batterie eingebracht.

US 2020 / 0 058 967 A1 beschreibt eine Batterie mit mehreren Energiespeichermodulen und mit einer Kühleinheit. Die Kühleinheit leitet Kühlflüssigkeit durch Kühlkanäle der Energiespeichermodule, wobei die Kühlflüssigkeit in einem geschlossenen System unter Druck zirkuliert. Die Kühlkanäle können Sollbruchstellen mit einem niedrigeren Schmelzpunkt aufweisen. Wenn die Batterie überhitzt, schmelzen die Sollbruchstellen und die im Kühlkreislauf vorhandene Kühlflüssigkeit ergießt sich auf die brennende Batteriezelle.

DE 10 2019 125 345 A1 beschreibt ein Verfahren zur Überwachung einer Kühlmittelverbindung zwischen einer Ladeinfrastruktur, die zur Übertragung einer elektrischen Leistung auf ein Kraftfahrzeug über ein Ladekabel ausgeführt ist, und einem Kraftfahrzeug. Die Kühlmittelverbindung umfasst eine Steckverbindung zwischen der Ladeinfrastruktur und dem Kraftfahrzeug, über die ein Kühlmittel ausgehend von einer Kühleinrichtung der Ladeinfrastruktur dem Kraftfahrzeug zugeführt und wieder abgeführt wird. Bei Feststellen einer Störung der Kühlmittelverbindung wird eine Förderung des Kühlmittels durch eine Pumpe der Ladeinfrastruktur abgebrochen und es wird eine Leitung zwischen der Kühlmittelverbindung und einem Wärmetauscher im Kraftfahrzeug unterbrochen.

Aus WO 2020/167810 A1 ist ein zur Kühlung ertüchtigtes Ladesystem für ein Elektrofahrzeug bekannt. Ein Notunterbrecher ermöglicht es, im Brandfall die Leistungszufuhr zur Batterie zu unterbrechen.

CN 111744124 A betrifft eine Batterie mit einem Rauchauslass, wobei im Brandfall Wasser von einem Hydranten durch ein Wassereinlassrohr in die Batterie eingeleitet werden und durch den Rauchauslass abgeführt werden kann. Vor dem Einleiten von Wasser wird die Energiezufuhr zur Batterie unterbrochen.

CN 205523745 U beschreibt eine Ladesäule für ein Elektrofahrzeug, die eine Löschmittelleitung in einem Ladekabel zur Verbindung mit einer Batterie des Elektrofahrzeugs aufweist. Bei Überschreiten eines Temperaturgrenzwerts wird die Ladesäule abgeschaltet und Löschmittel versprüht.

Die eingangs genannte EP 3 607 611 B1 beschreibt ein Energiespeichermodul umfassend eine Batteriezelle und ein gasdichtes Gehäuse. Mehrere Energiespeichermodule können elektrisch in Serie geschaltet sein und eine Energiespeichereinheit bilden. Eine Kühleinheit stellt den Energiespeichermodulen Kühlflüssigkeit bereit. Jedes Energiespeichermodul kann einen Kühler umfassen, in welchem die Batteriezelle installiert ist. Kühlflüssigkeit fließt durch Kanäle des Kühlers, deren Außenfläche in direktem Kontakt mit einer Oberfläche der Batteriezelle stehen kann. Die Kühlflüssigkeit zirkuliert unter Druck in einem geschlossenen System. In den Kühlkanälen können Berstbereiche vorgesehen sein, die einen niedrigeren Schmelzpunkt aufweisen als die Kühlkanäle im Übrigen und die aufbrechen, wenn sie für eine bestimmte Zeit einer Temperatur oberhalb einer vorgegebenen Temperatur ausgesetzt werden. Wenn ein Berstbereich aufbricht, ergießt sich die Kühlflüssigkeit aus dem geschlossenen System über die Batteriezelle. Nachdem der Kühlflüssigkeitsvorrat des ehemals geschlossenen Systems erschöpft ist, kann der Kühler mit einer alternativen Kühlflüssigkeitsquelle, wie einer Wassernetz oder einem Feuerhydranten, verbunden werden, sofern hierzu Zugang besteht.

Die oben ebenfalls bereits angeführte US 2010/0136391 A1 beschreibt ein System zum Abschwächen eines thermischen Durchgehens, das eine Mehrzahl von in einem Gehäuse angeordnete Batteriezellen und einen fluidgefüllten Kanal in der Nähe zumindest einer Teilmenge der Batteriezellen umfasst. Der Kanal weist mehrere Berstbereiche auf, die bei einer vorgegebenen Temperatur aufbrechen, welche niedriger ist als die Schmelztemperatur des Kanals. Wenn der Kanal aufbricht, ergießt sich das im Kanal enthaltene Fluid durch die Bruchstelle. Das System kann mit einer Pumpe und einem Reservoir verbunden sein. Die Pumpe kann aktiviert werden, wenn ein gemessener Druck unter einen Grenzwert fällt. Das Reservoir ist so bemessen, dass im Falle eines thermischen Durchgehens eine genügende Menge Fluid durch die aufgebrochenen Berstbereiche gepumpt werden kann, um die Batteriezellen hinreichend zu kühlen.

Aus US 2016/0204483 A1 ist ein flüssigkeitsgekühltes Batteriesystem bekannt, das ein thermisches Fortschreiten zwischen Zellen vermeidet.

### Aufgabe der Erfindung

Es ist eine Aufgabe der Erfindung, den Brandschutz beim Laden von Elektrofahrzeugen zu verbessern.

### Beschreibung der Erfindung

Diese Aufgabe wird erfindungsgemäß gelöst durch ein Verfahren nach Anspruch 1, eine Brandschutzvorrichtung mit den in Anspruch 10 angegebenen Merkmalen und eine Ladestation gemäß Anspruch 14. Die jeweiligen Unteransprüche und die Beschreibung geben vorteilhafte Varianten bzw. Ausführungsformen an.

### Erfindungsgemäßes Ladeverfahren

Erfindungsgemäß ist ein Verfahren zum Laden einer Batterie (eines Akkumulators) eines Elektrofahrzeugs vorgesehen. Das Elektrofahrzeug kann ein Hybridfahrzeug oder ein vollelektrisches Fahrzeug sein. Die Batterie ist grundsätzlich eine Traktionsbatterie, welche Energie für einen Antrieb des Fahrzeugs bereitstellt. Unter einer Batterie wird für die Beschreibung der vorliegenden Erfindung insbesondere ein wiederaufladbarer elektrochemischer Energiespeicher verstanden. Eine Ausgangsspannung der Batterie im geladenen Zustand kann wenigstens 40 V, bevorzugt wenigstens 300 V, insbesondere wenigstens 400 V, betragen.

Die Batterie weist wenigstens eine in einem Aufnahmeraum angeordnete Batteriezelle auf. Typischerweise umfasst die Batterie eine Vielzahl von Batteriezellen. Die wenigstens eine Batteriezelle kann beispielsweise eine Lithium-Ionen-Zelle sein.

Weiterhin weist die Batterie wenigstens einen Kanal auf. Eine Kanalwand trennt den Kanal und den Aufnahmeraum voneinander. Mit anderen Worten begrenzt die Kanalwand sowohl den Kanal als auch den Aufnahmeraum. Der Kanal und der Aufnahmeraum werden somit durch die Kanalwand voneinander abgegrenzt. Der Kanal kann sich an und/oder in dem Aufnahmeraum erstrecken. Insbesondere kann der Kanal zumindest abschnittsweise an einer Außenseite eines Batteriegehäuses, welches den Aufnahmeraum einschließt, verlaufen. Die Kanalwand bildet dann eine Außenwand des Aufnahmeraums bzw. des Batteriegehäuses. Ebenso kann der Kanal zumindest abschnittsweise innerhalb des Batteriegehäuses verlaufen.

Indem die Kanalwand den Kanal und den Aufnahmeraum voneinander trennt, wird erreicht, dass der Kanal zu dem Aufnahmeraum hin eröffnet wird, wenn die Kanalwand durchbrochen wird. Mit anderen Worten bewirkt ein Durchbruch in der Kanalwand eine fluidische Verbindung zwischen dem Kanal und dem Aufnahmeraum. Die Kanalwand kann insbesondere dann versagen bzw. durchbrochen werden, wenn eine Temperatur der Batterie bzw. einer der Batteriezellen übermäßig ansteigt, wie es im Schadensfall - etwa vor oder beim Ausbruch eines Brandes - der Fall sein kann.

Der Kanal weist wenigstens einen Berstbereich in der Kanalwand auf. Der Berstbereich ermöglicht ein definiertes Öffnen der Kanalwand zwischen dem Kanal und dem Aufnahmeraum. Im intakten Zustand trennt der Berstbereich als Teil der Kanalwand den Kanal von dem Aufnahmeraum ab. Im geborstenen Zustand des Berstbereichs ist der Kanal zu dem Aufnahmeraum hin eröffnet. Der Berstbereich kann eine geringere Wandstärke aufweisen als die Kanalwand im Übrigen. Der Berstbereich kann durch ein Material mit einer gegenüber der Kanalwand im Übrigen reduzierten Temperaturbeständigkeit gebildet sein. Dadurch kann erreicht werden, dass die Kanalwand bei einer genau einstellbaren Temperatur versagt. Der Berstbereich kann durch eine Berstscheibe gebildet sein. Dies kann eine Wiederinstandsetzung der Batterie vereinfachen. Der Berstbereich kann beispielsweise aus Metall, Kunststoff oder Grafit bestehen.

Weiter erfindungsgemäß ist vorgesehen, dass der Batterie elektrische Energie zugeführt wird, während der Kanal mit einem unter Druck stehenden Fluid gefüllt ist. Das Fluid in dem Kanal weist mit anderen Worten einen Überdruck gegenüber dem Umgebungsdruck auf. Der Druck (d. h. der Überdruck) des Fluids in dem Kanal kann wenigstens 0,1 bar, bevorzugt wenigstens 0,5 bar, besonders bevorzugt wenigstens 1 bar, ganz besonders bevorzugt wenigstens 2 bar, betragen. Die der Batterie zugeführte Energie wird in der wenigstens einen Batteriezelle gespeichert. Erfindungsgemäß ist somit vorgesehen, dass die Batterie geladen wird, während das Fluid in dem Kanal unter Druck steht.

Sobald die Kanalwand bei einem übermäßigen Temperaturanstieg in der Batterie versagt, strömt das Fluid aus dem Kanal in den Aufnahmeraum. Die Batterie bzw. insbesondere eine defekte Batteriezelle werden dadurch gekühlt. Das Ausbrechen eines Brandes kann dadurch verhindert oder zumindest verzögert werden. Falls bereits ein Brand ausgebrochen sein sollte, wird dieser durch das Fluid eingedämmt, an einer weiteren Ausbreitung gehindert oder vorzugsweise gelöscht.

Erfindungsgemäß wird bei einem Abfall des Drucks in dem Kanal in Folge eines Berstens des Berstbereichs bzw. wenigstens eines der Berstbereiche Fluid in den Kanal nachgefördert.

Durch den Druck des Fluids wird einerseits das Aufbrechen der Kanalwand im Schadensfall unterstützt. Andererseits bewirkt der Überdruck, dass nach dem Aufbrechen der Kanalwand eine ausreichende Menge von Fluid in den Aufnahmeraum strömt.

Das erfindungsgemäße Verfahren stellt somit sicher, dass im Falle eines übermäßigen Temperaturanstiegs beim Laden der Batterie unverzüglich und selbsttätig ein Löschereignis erfolgt. Dadurch kann das Entstehen bzw. die Ausbreitung eines Brandes besonders wirkungsvoll bekämpft werden. Insbesondere kann durch das automatische Löschen mittels des Fluids aus dem Kanal ein in Entstehung befindlicher Brand der Batterie bis zum Ergreifen weiterer Löschmaßnahmen eingedämmt werden.

Der durch das erfindungsgemäße Verfahren erreichte Brandschutz erstreckt sich auf das Elektrofahrzeug selbst sowie gegebenenfalls auf eine Immobilie, an oder in welcher das Elektrofahrzeug geladen wird. Der Brandschutz erfasst somit vorteilhaft auch einen Parkbereich, beispielsweise ein Parkhaus oder eine innen oder außen an einem Gebäude vorgesehene Parkbucht. Dies kann sich in einem Versicherungsvorteil niederschlagen. Zudem kann das erfindungsgemäße Verfahren die Möglichkeit eröffnen, Elektrofahrzeuge auch in Bereichen von Gebäuden zu laden, die bisher aus Brandschutzgründen hierfür ausgeschlossen waren.

Das erfindungsgemäße Verfahren wird vorzugsweise mit einer unten beschriebenen, erfindungsgemäßen Brandschutzvorrichtung bzw. einer unten beschriebenen, erfindungsgemäßen Ladestation durchgeführt. In diesem Zusammenhang beschriebene Merkmale können auch bei dem erfindungsgemäße Verfahren vorgesehen sein.

Der Ladevorgang (das Zuführen von elektrischer Energie) kann beginnen, bevor der Kanal mit dem unter Druck stehenden Fluid gefüllt ist. Erfindungsgemäß erfolgt jedoch zumindest ein Teil, vorzugsweise ein wesentlicher Teil, des Ladevorgangs, während das Fluid in dem Kanal unter Druck steht. Bevorzugt steht das Fluid in dem Kanal unter Druck, bevor mit der Zufuhr von elektrischer Energie zu der Batterie begonnen wird. Ebenso bevorzugt bleibt der Kanal mit dem unter Druck stehenden Fluid gefüllt, nachdem die Zufuhr von elektrischer Energie zu der Batterie beendet wurde. Dadurch kann der Brandschutz auch im Hinblick auf unabhängig von einem Ladevorgang spontan auftretende Batteriedefekte ausgedehnt werden.

Der Druck des Fluids in dem Kanal kann erhöht werden, wenn eine Temperatur der Batterie bzw. der wenigstens einen Batteriezelle ansteigt, insbesondere über einen vordefinierten Grenzwert und/oder mit einem zeitlichen Gradienten, der einen vordefinierten Grenzwert übersteigt. Dadurch kann eine größere Löschwirkung unmittelbar nach Ausbrechen eines sich durch den Temperaturanstieg ankündigenden Brandes erreicht werden. Die Temperatur der Batterie bzw. Batteriezelle kann durch einen Temperatursensor gemessen werden.

Ein Abfall des Drucks in dem Kanal deutet auf ein Versagen der Kanalwand hin. Wenn der Druck in den Kanal abfällt, ist folglich ein übermäßiger Temperaturanstieg der Batterie bzw. Batteriezelle zu befürchten, der insbesondere durch einen Defekt bzw. Brand verursacht sein kann. Der Druck in dem Kanal kann durch einen Drucksensor gemessen werden.

Erfindungsgemäß wird bei einem Abfall des Drucks in dem Kanal die Zufuhr von elektrischer Energie zu der Batterie beendet. Ein Anfachen eines Brandes durch die zugeführte elektrische Energie kann dadurch vermieden werden.

Bei einer besonders vorteilhaften Verfahrensvariante ist vorgesehen, dass bei einem Abfall des Drucks in dem Kanal ein Alarm ausgelöst wird. Der Alarm kann ein akustisches oder optisches Signal sein. Der Alarm kann an eine Brandmeldezentrale gesendet werden. Der Alarm kann an einen Nutzer des Elektrofahrzeugs, insbesondere an ein Endgerät des Nutzers, übermittelt werden. Der Alarm kann Informationen zum Standort des Elektrofahrzeugs und/oder zu Eigenschaften des Elektrofahrzeugs, beispielsweise geeigneten Angriffsmöglichkeiten für die Brandbekämpfung, enthalten. Der Alarm erlaubt es, weitere Maßnahmen zur Brandbekämpfung und Schadensverhütung einzuleiten.

Weiter erfindungsgemäß wird bei einem Abfall des Drucks in dem Kanal Fluid in den Kanal nachgefördert. Dies bewirkt, dass möglichst viel Fluid zu einer überhitzten bzw. brennenden Batteriezellen geleitet wird. Das nachgeförderte Fluid wird grundsätzlich einer außerhalb des Elektrofahrzeugs angeordneten Fluidquelle, beispielsweise einem Wassernetz oder einem Vorratsbehälter, entnommen.

Besonders bevorzugt ist das nachgeförderte (zweite) Fluid ein anderes Fluid, als das zuvor im Kanal befindliche (erste) Fluid. Das erste Fluid kann beispielsweise im Hinblick auf seine kostengünstige Verfügbarkeit sowie seine große Wärmekapazität zum Temperieren der Batterie gewählt sein. Das erste Fluid kann beispielsweise Wasser sein. Das zweite Fluid ist vorzugsweise im Hinblick auf seine Löschwirkung gewählt. Das zweite Fluid kann beispielsweise ein Schaum, ein Gel oder eine Löschflüssigkeit mit mehreren Komponenten sein. Insbesondere das zweite Fluid kann ein Pulver oder Granulat enthalten.

Das Fluid kann - solange die Kanalwand intakt ist - in dem Kanal ruhen. Dies vereinfacht den Aufbau der Batterie und einer Brandschutzvorrichtung zum Bereitstellen des Fluids und Aufbau des Drucks. Sobald die Kanalwand versagt, strömt das Fluid in den Aufnahmeraum.

Alternativ kann das Fluid - auch und gerade während die Kanalwand intakt ist - den Kanal durchströmen. Dies ermöglicht es, die Batterie mittels des Fluids zu temperieren.

Vorzugsweise besitzt das (strömende) Fluid eine Temperatur, die von einer Temperatur der Batterie, insbesondere der wenigstens einen Batteriezelle, abweicht, insbesondere um wenigstens 15 K, bevorzugt um wenigstens 30 K. Das Fluid kann dabei wärmer oder kälter sein als die Batterie bzw. Batteriezelle.

Somit kann die Batterie einerseits durch das Fluid erwärmt werden. Dies erlaubt es, eine kalte Batterie auf eine für einen Ladevorgang geeignete Temperatur aufzuheizen. Dadurch kann ein vollständiges Laden der Batterie bei niedrigen Umgebungstemperaturen begünstigt werden. Zudem kann ein Fahrgastraum des Elektrofahrzeugs vorgeheizt werden.

Andererseits kann die Batterie durch das Fluid gekühlt werden. Dies erlaubt es, beim Laden entstehende Wärme aus der Batterie abzuführen. Das Laden kann dann mit einer höheren Leistung erfolgen. Eine Ladedauer kann dadurch verringert werden.

Das Fluid kann ein Gas sein. Sofern das Fluid nach dem Ladevorgang in dem Kanal verbleibt wird das Gewicht des Elektrofahrzeugs durch ein gasförmige Fluid nicht nennenswert erhöht. Insbesondere kann das Fluid Kohlendioxid, Argon oder Stickstoff sein. Diese Gase zeichnen sich durch ihre Löschwirkung aus.

Alternativ kann das Fluid eine Flüssigkeit sein. Geeignete Flüssigkeiten zeichnen sich durch eine gute Löschwirkung aus. Zudem kann mittels einer Flüssigkeit die Batterie wirkungsvoll temperiert werden. Bevorzugt besteht das flüssige Fluid zu wenigstens 50 Vol.-%, insbesondere wenigstens 75 Vol.-%, aus Wasser. Das flüssige Fluid kann Wasser sein.

In dem Fluid kann ein Pulver oder Granulat suspendiert sein. Das Fluid kann mit anderen Worten ein Aerosol mit einem gasförmigen Trägermedium oder eine Suspension mit einem flüssigen Trägermedium sein.

### Erfindungsgemäße Brandschutzvorrichtung

In den Rahmen der vorliegenden Erfindung fällt auch eine Brandschutzvorrichtung für ein Elektrofahrzeug mit einer Batterie, wobei die Batterie wenigstens eine in einem Aufnahmeraum angeordnete Batteriezelle und wenigstens einen Kanal aufweist, wobei eine Kanalwand den Kanal und den Aufnahmeraum voneinander trennt. In der Kanalwand ist wenigstens ein Berstbereich ausgebildet. Das Elektrofahrzeug kann einen Fluidanschluss zum Anschließen einer Fluidleitung an den Kanal aufweisen.

Die Brandschutzvorrichtung weist eine Fluidversorgungseinrichtung auf. Die Fluidversorgungseinrichtung ist dazu eingerichtet, den Kanal mit unter Druck stehendem Fluid zu versorgen. Hierzu kann die Fluidversorgungseinrichtung eine Fördereinrichtung, beispielsweise eine Pumpe, aufweisen. Die Fördereinrichtung ermöglicht es, das Fluid in den Kanal zu fördern und unter Druck zu setzen. Alternativ oder zusätzlich kann die Fluidversorgungseinrichtung eine Drosseleinrichtung, beispielsweise ein Ventil, aufweisen. Die Drosseleinrichtung ermöglicht es, ein unter Druck stehend bereitgestelltes Fluid, beispielsweise aus einem Wassernetz, mit dem gewünschten Druck in den Kanal einzuleiten. Die Brandschutzvorrichtung kann einen Fluidstecker zum Anschließen an den Fluidanschluss des Elektrofahrzeugs aufweisen. Die Brandschutzvorrichtung kann wenigstens einen Drucksensor zum Bestimmen des Drucks des Fluids in dem Kanal aufweisen und/oder auf einen Drucksensor des Elektrofahrzeugs zugreifen.

Die Brandschutzvorrichtung weist ferner eine Steuereinrichtung auf. Steuereinrichtung ist dazu eingerichtet, das Zuführen von elektrischer Energie von einer Ladevorrichtung zu der Batterie (ein Laden der Batterie) zu gestatten oder zu unterbinden. Zu diesem Zweck kann die Steuereinrichtung für eine Kommunikation mit der Ladevorrichtung und/oder einem Batteriemanagementsystem des Elektrofahrzeugs eingerichtet sein. Zum Vermitteln der Kommunikation mit dem Batteriemanagementsystem kann die Brandschutzvorrichtung einen Kommunikationsadapter (Dongle) zum Anschließen an eine Schnittstelle des Elektrofahrzeugs, beispielsweise eine On-Board-Diagnose-Schnittstelle oder eine USB-Schnittstelle, aufweisen.

Erfindungsgemäß ist die Steuereinrichtung dazu eingerichtet, das Laden der Batterie in Abhängigkeit von einem Druck und/oder einer Druckänderung des Fluids in dem Kanal zu gestatten oder zu unterbinden. Insbesondere kann die Steuereinrichtung dazu eingerichtet sein, das Laden der Batterie zu unterbinden, wenn der Druck des Fluids in dem Kanal einen vordefinierten Grenzwert unterschreitet und/oder wenn sich der Druck des Fluids in dem Kanal in einem vorbestimmten Ausmaß (nach Betrag und/oder Änderungsgeschwindigkeit) verringert. Entsprechend kann die Steuereinrichtung dazu eingerichtet sein, das Laden der Batterie zu gestatten, wenn der Druck des Fluids den vordefinierten Grenzwert überschreitet. Der Grenzwert für den Druck (Überdruck gegenüber dem Umgebungsdruck) des Fluids in dem Kanal kann wenigstens 0,1 bar, bevorzugt wenigstens 0,5 bar, besonders bevorzugt wenigstens 1 bar, ganz besonders bevorzugt wenigstens 2 bar, betragen.

Die erfindungsgemäße Brandschutzvorrichtung wird vorzugsweise zur Durchführung eines oben beschriebenen, erfindungsgemäßen Ladeverfahrens verwendet. Die erfindungsgemäße Brandschutzvorrichtung kann Teil einer unten beschriebenen, erfindungsgemäßen Ladestation sein. In Zusammenhang mit dem Ladeverfahren oder der Ladestation beschriebene Merkmale können auch bei der erfindungsgemäßen Brandschutzvorrichtung vorgesehen sein.

Mittels der Brandschutzvorrichtung kann insbesondere erreicht werden, dass bei einem Aufbrechen der Kanalwand, welches typischerweise durch einen übermäßigen Temperaturanstieg verursacht wird und auf eine entsprechende Brandgefahr hinweist, unverzüglich und ohne weiteres Zutun eine Löschmaßnahme erfolgt, indem das Fluid aus dem Kanal in den Aufnahmeraum strömt. Die Brandschutzvorrichtung ermöglicht es zudem, Brände der Batterie des parkenden Elektrofahrzeugs, die unabhängig von einem Ladevorgang ausbrechen, selbsttätig zu bekämpfen.

Die Brandschutzvorrichtung kann dazu eingerichtet sein, den Druck des Fluids in dem Kanal zu erhöhen, wenn eine Temperatur der Batterie bzw. der wenigstens einen Batteriezelle ansteigt. Dadurch kann eine größere Löschwirkung unmittelbar nach Ausbrechen eines sich durch den Temperaturanstieg ankündigenden Brandes erreicht werden.

Die Brandschutzvorrichtung ist erfindungsgemäß dazu eingerichtet, bei einem Abfall des Drucks in dem Kanal Fluid in den Kanal nach zu fördern. Dadurch kann die Löschwirkung weiter verbessert werden. Die Fluidversorgungseinrichtung entnimmt das nachgeförderte Fluid grundsätzlich einer außerhalb des Elektrofahrzeugs angeordneten Fluidquelle, beispielsweise einem Wassernetz oder einem Vorratsbehälter. Insbesondere kann die Brandschutzvorrichtung dazu eingerichtet sein, ein Bersten des Berstbereichs bzw. wenigstens eines der Berstbereiche zu detektieren, beispielsweise anhand des Betrags und/oder der Änderungsgeschwindigkeit der Druckänderung, und bei einem Abfall des Drucks in dem Kanal in Folge eines Berstens des Berstbereichs Fluid in den Kanal nach zu fördern.

Die Brandschutzvorrichtung kann wenigstens einen Vorratsbehälter für das Fluid aufweisen. Der Vorratsbehälter kann insbesondere ein Flüssigkeitstank oder ein Gasbehälter sein. Insbesondere kann die Brandschutzvorrichtung zwei Vorratsbehälter mit unterschiedlichen Fluiden aufweisen. Die Brandschutzvorrichtung kann dazu eingerichtet sein, zunächst ein erstes Fluid aus einem ersten Vorratsbehälter in den Kanal zu fördern und bei einem Abfall des Drucks in dem Kanal ein zweites Fluid aus einem zweiten Vorratsbehälter in den Kanal zu fördern. Das Fluid bzw. das erste Fluid kann beispielsweise im Hinblick auf seine kostengünstige Verfügbarkeit sowie seine große Wärmekapazität zum Temperieren der Batterie gewählt sein. Das (insbesondere erste) Fluid kann beispielsweise Wasser sein. Das zweite Fluid ist vorzugsweise im Hinblick auf seine Löschwirkung gewählt. Das (insbesondere zweite) Fluid kann beispielsweise ein Schaum, ein Gel oder eine Löschflüssigkeit mit mehreren Komponenten sein.

Die Brandschutzvorrichtung kann einen Wärmetauscher zum Kühlen und/oder Erwärmen des Fluids aufweisen. Durch Bereitstellen von gekühltem bzw. erwärmtem Fluid kann die Batterie für einen Ladevorgang temperiert werden. Zudem kann ein Fahrgastraum des Elektrofahrzeugs temperiert werden.

Bevorzugt weist die Brandschutzvorrichtung eine Kommunikationseinrichtung auf. Die Kommunikationseinrichtung ermöglicht eine Kommunikation mit der Ladevorrichtung, einer Brandmeldezentrale und/oder einem Endgerät eines Nutzers des Elektrofahrzeugs. Die Kommunikation kann beispielsweise über Mobilfunk erfolgen. Insbesondere kann die Brandschutzvorrichtung dazu eingerichtet sein, bei einem Abfall des Drucks in dem Kanal, einen Alarm an eine Brandmeldezentrale und/oder das Endgerät des Nutzers zu übermitteln. Der Alarm kann Informationen zum Standort des Elektrofahrzeugs und/oder zu Eigenschaften des Elektrofahrzeugs, beispielsweise geeigneten Angriffsmöglichkeiten für die Brandbekämpfung, enthalten.

### Erfindungsgemäße Ladestation

Ebenfalls in den Rahmen der vorliegenden Erfindung fällt eine Ladestation für ein Elektrofahrzeug. Die Ladestation weist eine oben beschriebene, erfindungsgemäße Brandschutzvorrichtung auf. Ferner weist die Ladestation eine Ladevorrichtung zum Zuführen von elektrischer Energie zu der Batterie auf.

Die erfindungsgemäße Ladestation ermöglicht die Durchführung des oben beschriebenen, erfindungsgemäßen Ladeverfahrens. Bevorzugt wird die Ladestation zur Durchführung des erfindungsgemäßen Ladeverfahrens verwendet. Besonders bevorzugt ist die Ladestation zur, insbesondere automatischen, Durchführung des erfindungsgemäßen Ladeverfahrens eingerichtet.

Die Brandschutzvorrichtung und die Ladevorrichtung der Ladestation können voneinander separate Komponenten sein. Dies ermöglicht ein Aufrüsten einer vorhandenen Ladevorrichtung zu einer erfindungsgemäßen Ladestation, indem eine erfindungsgemäße Brandschutzvorrichtung hinzugefügt und ggf. eine Kommunikationsmöglichkeit zwischen der Ladevorrichtung und der Brandschutzvorrichtung eingerichtet wird.

Bevorzugt weisen die Brandschutzvorrichtung und die Ladevorrichtung der Ladestation ein gemeinsames Gehäuse auf. Dadurch kann ein Platzbedarf für die Ladestation verringert werden. Das Gehäuse kann hitzebeständig sein und beispielsweise für wenigstens 60 Minuten Temperaturen bis zu 750°C standhalten. Die Ladestation, insbesondere die Brandschutzvorrichtung, kann dadurch bei einem Brand des Elektrofahrzeugs geschützt und funktionsfähig gehalten werden.

Die Brandschutzvorrichtung und die Ladevorrichtung können unabhängig voneinander an das Elektrofahrzeug anschließbar sein. Insbesondere kann die Ladevorrichtung einen Ladestecker und die Brandschutzvorrichtung einen Fluidstecker aufweisen.

Besonders bevorzugt weist die Ladestation einen kombinierten Lade- und Fluidstecker zum elektrischen Verbinden der Ladevorrichtung mit der Batterie und zum Versorgen des Kanals mit dem unter Druck stehenden Fluid auf. Dies vereinfacht das Verbinden des Elektrofahrzeugs mit der Ladestation. Zudem kann über den kombinierten Lade- und Fluidstecker eine Kommunikationsverbindung zwischen der Ladevorrichtung und der Brandschutzvorrichtung sowie zwischen dem Elektrofahrzeug und der Ladestation bzw. deren Ladevorrichtung und Brandschutzvorrichtung eingerichtet werden.

Weitere Vorteile der Erfindung ergeben sich aus den Ansprüchen, der Beschreibung und der Zeichnung. Erfindungsgemäß können die vorstehend genannten und die noch weiter ausgeführten Merkmale jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen beschrieben. Es zeigen:
- Fig. 1: eine schematische Darstellung einer ersten Ausführungsform einer erfindungsgemäßen Ladestation mit einer erfindungsgemäßen Brandschutzvorrichtung beim Laden eines Elektrofahrzeugs;
- Fig. 2: einen durch einen Aufnahmeraum für Batteriezellen verlaufenden Kanal einer Batterie des Elektrofahrzeugs aus Figur 1 in einer schematischen Schnittansicht;
- Fig. 3: ein schematisches Ablaufdiagramm eines erfindungsgemäßen Ladeverfahrens;
- Fig. 4: eine schematische Darstellung einer zweiten Ausführungsform einer erfindungsgemäßen Ladestation mit einer erfindungsgemäßen Brandschutzvorrichtung beim Laden eines Elektrofahrzeugs;
- Fig. 5: eine schematische Darstellung einer dritten Ausführungsform einer erfindungsgemäßen Ladestation mit einer erfindungsgemäßen Brandschutzvorrichtung;
- Fig. 6: eine schematische Darstellung einer vierten Ausführungsform einer erfindungsgemäßen Ladestation mit einer erfindungsgemäßen Brandschutzvorrichtung.

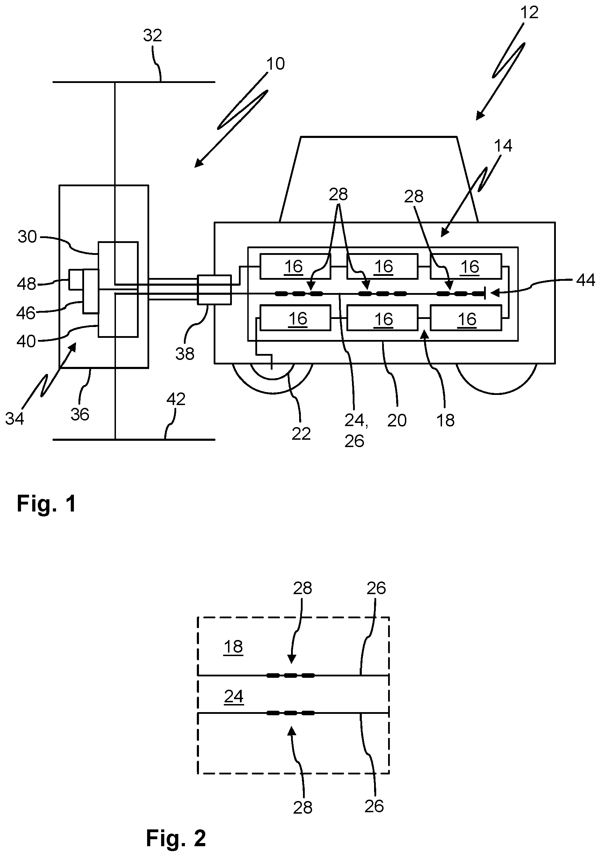

**Figur 1** zeigt eine Ladestation **10** beim Laden eines Elektrofahrzeugs **12.** Das Elektrofahrzeug 12 weist eine Batterie **14** auf. Die Batterie 14 umfasst mehrere Batteriezellen **16,** die in einem Aufnahmeraum **18** angeordnet sind, welcher durch ein Batteriegehäuse **20** umschlossen ist. Die Batterie 14 dient der Versorgung eines elektrischen Antriebsmotors **22** des Elektrofahrzeugs 12 mit elektrischer Energie.

Durch den Aufnahmeraum 18 verläuft ein Kanal **24.** Eine Kanalwand **26** grenzt den Kanal 24 von dem Aufnahmeraum 18 ab, vergleiche **Figur 2****,** welche eine vergrößerte Darstellung eines Ausschnitts des Kanals 24 im Aufnahmeraum 18 zeigt. In der Kanalwand 26 sind Berstbereiche **28** ausgebildet. Die Berstbereiche 28 bilden Sollbruchstellen, an welchen die Kanalwand 26 versagt, wenn eine Temperatur im Aufnahmeraum 18 über einen durch die Eigenschaften der Berstbereiche 28 und den Druck im Kanal 24 definierten Grenzwert steigt. Im geborstenen Zustand der Berstbereiche 28 ist der Kanal 24 in den Aufnahmeraum 18 eröffnet.

Die Ladestation 10 weist eine Ladevorrichtung **30** auf. Die Ladevorrichtung 30 dient der Zufuhr von elektrischer Energie zu der Batterie 14. Mit anderen Worten ermöglicht die Ladevorrichtung 30 das Laden der Batterie 14. Die Ladevorrichtung kann die elektrische Energie aus einem Stromnetz **32** entnehmen.

Die Ladestation 10 weist ferner eine Brandschutzvorrichtung **34** auf. Die Brandschutzvorrichtung 34 und die Ladevorrichtung 30 können in einem gemeinsamen Gehäuse **36** integriert sein. Die Ladevorrichtung 30 und die Brandschutzvorrichtung 34 der Ladestation 10 sind hier über einen kombinierten Lade- und Fluidstecker **38** (nachfolgend auch als Kombistecker bezeichnet) an das Elektrofahrzeug 12 anschließbar.

Die Brandschutzvorrichtung 34 weist eine Fluidversorgungseinrichtung **40** auf. Die Fluidversorgungseinrichtung 40 dient dazu, den Kanal 24 mit Fluid zu füllen und das Fluid in dem Kanal 24 unter Druck zu setzen. Das Fluid kann beispielsweise Wasser sein, welches die Fluidversorgungseinrichtung 40 aus einem Wassernetz **42** entnehmen kann. Zum Fördern des Fluids und zum Druckaufbau kann eine nicht näher dargestellte Fördereinrichtung, beispielsweise aufweisend eine Pumpe, vorgesehen sein.

Bei der in Figur 1 dargestellten Ausführungsformen weist der Kanal 24 ein blindes Ende **44** auf. Das Fluid ruht somit in dem Kanal 24. Es versteht sich, dass der Kanal 24 verzweigt sein kann und mehrere blinde Enden aufweisen kann (nicht näher dargestellt).

Eine Steuereinrichtung **46** dient zum Steuern der Ladevorrichtung 30 und der Brandschutzvorrichtung 34. Insbesondere kann die Durchführung eines Ladevorgangs mittels der Steuereinrichtung 46 freigegeben oder beendet werden. Ferner kann die Steuereinrichtung 46 den Druck und gegebenenfalls den Volumenstrom des von der Fluidversorgungseinrichtung 40 in den Kanal 24 geförderten Fluids steuern.

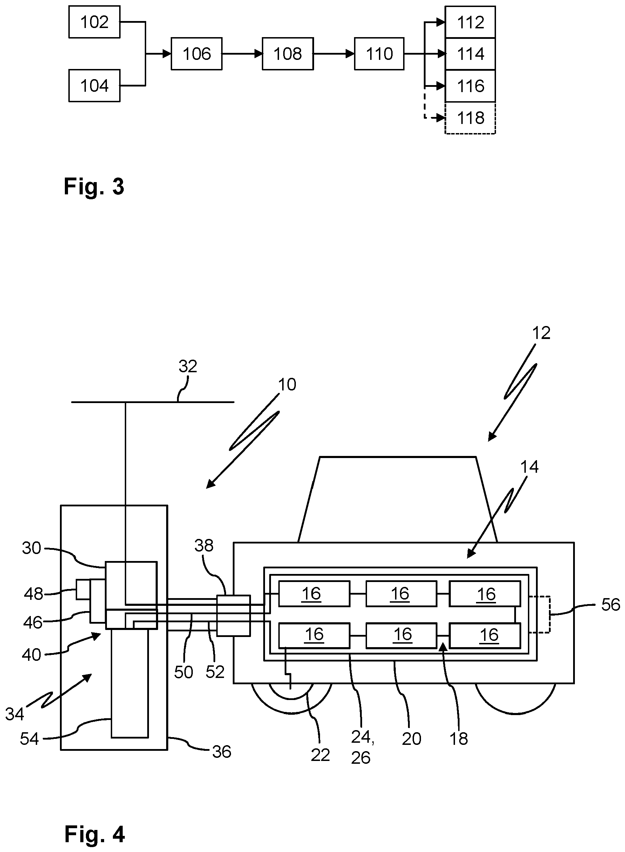

**Figur 3** zeigt ein Ablaufdiagramm eines erfindungsgemäßen Ladeverfahrens, das beispielsweise mit der Ladestation 10 und dem Elektrofahrzeug 12 von Figur 1 durchgeführt werden kann. Für die Durchführung des Ladeverfahrens wird der Kanal 24 in einem Schritt **102** mittels der Fluidversorgungseinrichtung 40 der Brandschutzvorrichtung 34 mit unter Druck stehendem Fluid gefüllt bzw. bereits in dem Kanal 24 befindliches Fluid wird unter Druck gesetzt. Während das Fluid in dem Kanal 24 unter Druck steht, wird die Batterie 14 mittels der Ladevorrichtung 30 in einem Schritt **104** geladen.

Beispielsweise aufgrund eines Fertigungsfehlers möge eine der Batteriezellen 16 beim Laden überhitzen oder gar in Brand geraten, vergleiche Schritt **106.** Diese Erwärmung der Batterie 14 führt zu einem Aufreißen der Kanalwand 26 insbesondere in einem zur überhitzten bzw. brennenden Batteriezelle 16 weisenden Berstbereich 28, vergleiche Schritt **108.** Der Kanal 24 wird dadurch in den Aufnahmeraum 18 eröffnet.

Daraufhin strömt das Fluid aus dem Kanal 24 in den Aufnahmeraum 18, vergleiche Schritt **110.** Die Batteriezellen 16 werden dadurch gekühlt. Falls Batteriezellen 16 brennen sollten, werden diese vorzugsweise gelöscht.

Das Ausströmen des Fluids aus dem Kanal 24 führt zu einem Druckabfall im Kanal 24. Dieser Druckabfall wird von der Steuereinrichtung 46 über nicht näher dargestellte Sensoren erkannt.

Die Steuereinrichtung 46 veranlasst daher die Fluidversorgungseinrichtung 40 mehr Fluid in den Kanal 24 zu fördern, vergleiche Schritt **112.** Somit wird weiteres Fluid bereitgestellt, das in den Aufnahmeraum 18 strömt, um die Batteriezellen 16 zu kühlen bzw. das Fortschreiten eines Brandes zumindest einzudämmen oder zu verzögern. Zudem unterbricht die Steuereinrichtung 46 in einem Schritt **114** die Zufuhr von elektrischer Energie zu der Batterie 14. Weiterhin kann die Steuereinrichtung 46 in einem Schritt **116** mittels einer Kommunikationseinrichtung **48** einen Alarm an eine Brandmeldezentrale und/oder ein Endgerät eines Nutzers des Elektrofahrzeugs 12 übermitteln.

Eine Abwandlung der Ladestation 10 bzw. des Elektrofahrzeugs 12 ist in **Figur 4** dargestellt. Nachfolgend werden vorrangig die Unterschiede zu Figur 1 beschrieben. Im Übrigen sei auf die vorangehende Beschreibung verwiesen.

Das in Figur 4 dargestellte Elektrofahrzeug 12 weist eine Batterie 14 mit einem durchströmbaren Kanal 24 auf. Der Kanal 24 weist zwei zu einer Anschlussbuchse für einen kombinierten Lade- und Fluidstecker 38 offene Enden auf. Entsprechend führen eine Zuleitung **50** und eine Rückleitung **52** von einer Fluidversorgungseinrichtung 40 zu dem Kombistecker 38. Es versteht sich, dass der Verlauf des Kanals 24 in Figur 4 nur rein beispielhaft dargestellt ist. Der Kanal könnte beispielsweise auch in Schleifen zwischen den Batteriezellen 26 verlaufen (nicht näher dargestellt). Ferner könnte der Kanal 24 unmittelbar (innen und/oder außen) am Batteriegehäuse 20 verlaufen. Insbesondere könnte eine Kanalwand das Batteriegehäuse 20 mit ausbilden. Auch bei der hier dargestellten Ausführungsform weist der Kanal 24 nicht im einzelnen gezeigte Berstbereiche auf, vergleiche insofern Figur 2.

Die Fluidversorgungseinrichtung 40 der Brandschutzvorrichtung 34 weist hier einen Vorratsbehälter **54** für das Fluid, beispielsweise Wasser, auf. Die Fluidversorgungseinrichtung 40 pumpt das Fluid durch die Zuleitung 50 in den Kanal 24. Das Fluid durchströmt den Kanal 24 und gelangt über die Rückleitung 52 zurück in den Vorratsbehälter 54. Die Fluidversorgungseinrichtung 40 ist dabei derart konfiguriert, dass der Druck des Fluids in dem Kanal 24 stets über dem Umgebungsdruck liegt. Insbesondere liegt der Druck des Fluids auch beim Austritt aus dem Kanal 24 in die Rückleitung 52 am Kombistecker 38 über dem Umgebungsdruck. Neben einer Fördereinrichtung, etwa einer Pumpe, zum Beschicken der Zuleitung 50 mit dem Fluid kann die Fluidversorgungseinrichtung 40 auch eine Drosseleinrichtung, etwa ein Drosselventil, an der Rückleitung 52 aufweisen (nicht im Einzelnen dargestellt).

Der Kanal 24 kann mit einem fahrzeugfesten Kühlsystem **56** zusammenwirken. Auch wenn die Ladestation 10 nicht an das Elektrofahrzeug 12 angeschlossen ist, kann das Kühlsystem 56 Fluid durch den Kanal 24 pumpen und das Fluid in dem Kanal 24 kühlen. Insbesondere kann das Kühlsystem 56 zum Kühlen der Batterie 14 im Fahrbetrieb dienen. Da beim Laden die Brandschutzvorrichtung 34 an das Elektrofahrzeug 12 angeschlossen ist, kann das Kühlsystem 56 kleiner dimensioniert und insbesondere die Menge des im Elektrofahrzeug 12 mitgeführten Fluids reduziert werden.

Der Betrieb der Ladestation 10 von Figur 4 kann grundsätzlich wie oben zu Figur 3 beschrieben erfolgen, wobei das Fluid nun den Kanal 24 unter Druck durchströmt, anstatt in dem Kanal 24 zu ruhen. Bei einem Druckabfall in dem Kanal 24 kann (alternativ oder zusätzlich zu den oben beschriebenen Maßnahmen, vergleiche Schritte 112 bis 116) das Zurückströmen von Fluid aus dem Kanal 24 in den Vorratsbehälter 54 verringert oder unterbunden werden, vergleiche Schritt **118.** Die Steuereinrichtung 46 kann hierzu auf die Drosseleinrichtung einwirken und beispielsweise das Drosselventil weiter oder vollständig schließen. Dadurch kann erreicht werden, dass besonders viel Fluid aus dem Kanal 24 in den Aufnahmeraum 18 strömt.

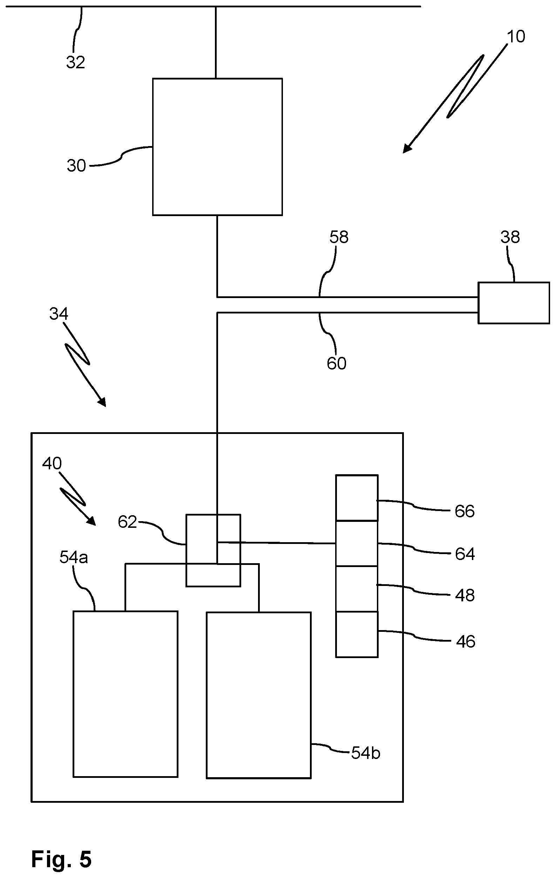

**Figur 5** zeigt eine weitere Ladestation 10. Die Ladestation 10 weist eine Ladevorrichtung 30 und eine Brandschutzvorrichtung 34 auf. Die Ladevorrichtung 30 und die Brandschutzvorrichtung 34 sind hier separat voneinander ausgebildet. Die Ladevorrichtung 30 kann beispielsweise eine sogenannte Wallbox sein, die an ein Stromnetz 32 angeschlossen ist.

Die Ladestation 10 weist einen kombinierten Lade- und Fluidstecker 38 auf. Ein Ladekabel **58** führt von der Ladevorrichtung 30 zu dem Kombistecker 38. Ein Fluidschlauch **60** führt von der Brandschutzvorrichtung 34 zu dem Kombistecker 38. Der Kombistecker 38 ermöglicht somit das gemeinsame Anschließen der Ladevorrichtung 30 und der Brandschutzvorrichtung 34 an ein Elektrofahrzeug 12, vergleiche hierzu auch Figuren 1 und 4.

Bei der Ausführungsform von Figur 5 weist eine Fluidversorgungseinrichtung 40 der Brandschutzvorrichtung 34 zwei Vorratsbehälter **54a, 54b** auf. Die Vorratsbehälter 54a, 54b können dasselbe Fluid oder unterschiedliche Fluide enthalten. Mittels einer Fluidfördereinrichtung **62** kann wahlweise das Fluid aus dem einen oder dem anderen der Vorratsbehälter 54a, 54b unter Druck zu dem Elektrofahrzeug 12 geleitet werden. Hierzu kann die Fluidversorgungseinrichtung 40 ein nicht näher dargestelltes Ventilsystem aufweisen. Eine Steuereinrichtung 46 kann die Fluidfördereinrichtung 62 bzw. das Ventilsystem entsprechend ansteuern. Die Fluidfördereinrichtung 62 kann einen Kompressor umfassen (nicht näher dargestellt).

Die Brandschutzvorrichtung 34 kann ein Sensorsystem **64** aufweisen, dessen Sensoren nicht im Einzelnen dargestellt sind. Das Sensorsystem 64 kann einen Drucksensor oder mehrere Drucksensoren zum Messen eines Drucks des Fluids in dem Fluidschlauch 60 bzw. einem Kanal 24 des Elektrofahrzeugs aufweisen. Ferner kann das Sensorsystem 64 einen Rauchsensor aufweisen. Weiterhin kann das Sensorsystem 64 einen Temperatursensor, insbesondere eine Infrarotkamera, aufweisen.

Eine Kommunikationseinrichtung 48 ermöglicht eine Kommunikation der Brandschutzvorrichtung 34 mit der Ladevorrichtung 30, einem Endgerät eines Nutzers sowie einer Brandmeldezentrale. Insbesondere kann die Kommunikationseinrichtung 48 dazu ausgebildet sein, Statusmeldungen an das Endgerät des Nutzers zu senden. Ferner ist die Kommunikationseinrichtung 48 vorzugsweise dazu ausgebildet, einen Alarm an die Brandmeldezentrale und das Endgerät des Nutzers zu übermitteln, wenn das Sensorsystem 64 eine Brandgefahr oder einen bereits ausgebrochenen Brand erkennt.

Weiterhin kann die Brandschutzvorrichtung 34 eine Signaleinrichtung **66** aufweisen. Die Signaleinrichtung 66 kann ein oder mehrere Anzeigeelemente, wie beispielsweise Kontrolllampen, aufweisen, um einen Status der Brandschutzvorrichtung 34 sowie vorzugsweise der Ladevorrichtung 30 und/oder des Elektrofahrzeugs 12 anzuzeigen. Ferner kann die Signaleinrichtung 66 eine Sirene für einen akustischen Alarm aufweisen.

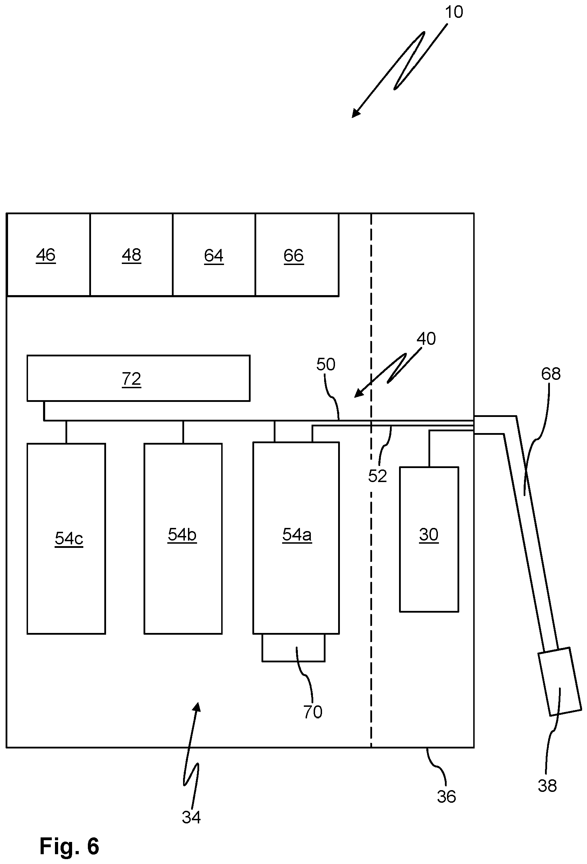

**Figur 6** zeigt eine weitere Ausführungsform einer Ladestation 10. Die Ladestation 10 weist eine Ladevorrichtung 30 und eine Brandschutzvorrichtung 34 auf, die in ein gemeinsames Gehäuse 36 integriert sein können.

Ein kombinierter Lade- und Fluidstecker 38 ist über eine Kabel- und Schlaucheinheit **68** mit der Ladevorrichtung 30 und der Brandschutzvorrichtung 34 verbunden. Die Kabel- und Schlaucheinheit 68 ermöglicht das Leiten von elektrischer Energie von der Ladevorrichtung 30 zu einem Elektrofahrzeug 12 (vergleiche Figuren 1 und 4) sowie das Leiten von Fluid von einer Fluidversorgungseinrichtung 40 der Brandschutzvorrichtung 34 zu dem Elektrofahrzeug 12 und gegebenenfalls von dem Elektrofahrzeug 12 zu der Fluidversorgungseinrichtung 40 zurück. Hier führen eine Zuleitung 50 sowie eine Rückleitung 52 von der bzw. zu der Fluidversorgungseinrichtung 40 durch die Kabel- und Schlaucheinheit 68 zu dem Kombistecker 38.

Die in Figur 6 dargestellte Brandschutzvorrichtung 34 weist drei Vorratsbehälter 54a, 54b, **54c** auf. Alle drei Vorratsbehälter 54a, 54b, 54c sind an die Zuleitung 50 angeschlossen. Der Vorratsbehälter 54a ist zudem an die Rückleitung 52 angeschlossen.

Der Vorratsbehälter 54a enthält als Fluid ein kombiniertes Lösch- und Temperiermittel, beispielsweise Wasser. Ein Wärmetauscher **70** ermöglicht es, das Fluid in dem Vorratsbehälter 54a zu erwärmen oder zu kühlen. Indem das Fluid aus dem Vorratsbehälter 54a durch einen Kanal 24 einer Batterie 16 des Elektrofahrzeugs 12 gefördert wird (vergleiche hierzu auch Figur 4 und die obige Beschreibung), kann die Batterie 16 für einen Ladevorgang temperiert werden. Insbesondere kann die Batterie 16 während des Ladevorgangs gekühlt werden. Zudem kann die Batterie 16 erforderlichenfalls vor dem Ladevorgang oder zu Beginn des Ladevorgangs erwärmt werden. Der Wärmetauscher 70 kann das Fluid in dem Vorratsbehälter 54a hierzu auf einer für den Ladevorgang geeigneten Temperatur, beispielsweise zwischen 20°C und 40°C, insbesondere zwischen 25°C und 32°C, halten. Die Batterie 16 wird dann je nach Bedarf erwärmt oder gekühlt, ohne dass es hierzu eines gesonderten Steuerungseingriffes bedarf.

Sollte die Temperatur der Batterie 16, beispielsweise aufgrund eines Defekts übermäßig ansteigen, versagt wie oben beschrieben die Kanalwand 26, sodass sich das Fluid in den Aufnahmeraum 18 mit den Batteriezellen 16 ergießt. Das unter Druck durch den Kanal 24 geförderte Fluid bewirkt somit unverzüglich einen ersten Löschvorgang.

Ein Sensorsystem 64 erkennt den Druckabfall beim Austreten des Fluids in den Aufnahmeraum 18. Eine Steuereinrichtung 46 veranlasst daher, dass ein anderes Fluid, insbesondere ein Löschmittel, aus einem der Vorratsbehälter 54b, 54c in den Kanal 24 der Batterie 16 nachgefördert wird. Der Vorratsbehälter 54b kann beispielsweise ein Löschgel enthalten. Der Vorratsbehälter 54c kann beispielsweise einen Löschschaum enthalten. Es kann vorgesehen sein, dass die Steuereinrichtung 46 über eine Kommunikationseinrichtung 48 auf Informationen zu dem Elektrofahrzeug 12, beispielsweise betreffend die Art der verbauten Batteriezellen 16, zugreifen kann. Dies Informationen erlauben vorteilhafterweise eine Auswahl des geeigneten Fluids als Löschmittel.

Die Fluidversorgungseinrichtung 40 umfasst hier als vierten Vorratsbehälter einen Druckbehälter **72.** In dem Druckbehälter 72 kann als ein weiteres Fluid ein nicht brennbares Gas, beispielsweise Stickstoff, unter hohem Druck, beispielsweise wenigstens 50 bar, insbesondere wenigstens 100 bar, vorgehalten sein. Durch geeignetes Ansteuern eines nicht näher dargestellten Ventilsystems kann das Gas aus dem Druckbehälter 72 das Fluid aus einem der Vorratsbehälter 54b, 54c in den Kanal 24 und durch die geborstene Kanalwand 26 in den Aufnahmeraum 18 pressen. Derart kann besonders schnell eine große Menge von als Löschmittel hochwirksamem Fluid zu einem Brandherd in der Batterie 16 geleitet werden.

Zusammenfassend betrifft die Erfindung das brandgeschützte Laden von Elektrofahrzeugen. Während eine Batterie des Elektrofahrzeugs geladen wird, steht ein Fluid in einem Kanal der Batterie unter Druck. Im Falle eines übermäßigen Temperaturanstiegs versagt eine Kanalwand. Das Fluid ergießt sich daraufhin in die Batterie zu den überhitzten bzw. brennenden Batteriezellen. Eine Brandschutzvorrichtung, welche das Fluid unter Druck bereitstellt, kann auch unabhängig von einem Ladevorgang aktiv sein.

### Bezugszeichenliste

Ladestation **10**
Elektrofahrzeug **12**
Batterie **14**
Batteriezellen **16**
Aufnahmeraum **18**
Batteriegehäuse **20**
Elektrischer Antriebsmotor **22**
Kanal **24**
Kanalwand **26**
Berstbereiche **28**
Ladevorrichtung **30**
Stromnetz **32**
Brandschutzvorrichtung **34**
Gehäuse **36**
Lade- und Fluidstecker **38**
Fluidversorgungseinrichtung **40**
Wassernetz **42**
blindes Ende **44**
Steuereinrichtung **46**
Kommunikationseinrichtung **48**
Zuleitung **50**
Rückleitung **52**
Vorratsbehälter **54; 54a, 54b, 54c**
Kühlsystem **56**
Ladekabel **58**
Fluidschlauch **60**
Fluidfördereinrichtung **62**
Sensorsystem **64**
Signaleinrichtung **66**
Kabel- und Schlaucheinheit **68**
Wärmetauscher **70**
Druckbehälter **72**
Bereitstellen **102** von Fluid unter Druck in dem Kanal 24
Laden **104** der Batterie 14
Überhitzen/Brennen **106** einer der Batteriezellen 16
Eröffnen **108** der Kanalwand 26
Ausströmen **110** von Fluid aus dem Kanal 24 in den Aufnahmeraum 18
Nachfördern **112** von Fluid in den Kanal 24
Beenden **114** des Ladevorgangs
Auslösen **116** eines Alarms
Verringern **118** des Zurückströmens

## Patentansprüche

1. Verfahren zum Laden einer Batterie (14) eines Elektrofahrzeugs (12),
wobei die Batterie (14) wenigstens eine in einem Aufnahmeraum (18) angeordnete Batteriezelle (16) und wenigstens einen Kanal (24) aufweist, wobei eine Kanalwand (26), in der wenigstens ein Berstbereich (28) ausgebildet ist, den Kanal (24) und den Aufnahmeraum (18) voneinander trennt,
wobei der Batterie (14) elektrische Energie zugeführt wird, während der Kanal (24) mit einem unter Druck stehenden Fluid gefüllt ist,
wobei bei einem Abfall des Drucks in dem Kanal (24) in Folge eines Berstens des Berstbereichs (28) Fluid in den Kanal (24) nachgefördert wird,
und wobei bei einem Abfall des Drucks in dem Kanal (24) die Zufuhr von elektrischer Energie zu der Batterie (14) beendet wird.

2. Verfahren nach Anspruch 1, **dadurch gekennzeichnet, dass** bei einem Abfall des Drucks in dem Kanal (24) ein Alarm ausgelöst wird.

3. Verfahren nach einem der vorhergehenden Ansprüche, **dadurch gekennzeichnet, dass** der Druck des Fluids in dem Kanal (24) erhöht wird, wenn eine Temperatur der Batterie (14) oder der wenigstens einen Batteriezelle (16) ansteigt.

4. Verfahren nach einem der vorhergehenden Ansprüche, **dadurch gekennzeichnet, dass** das nachgeförderte Fluid ein anderes Fluid ist.

5. Verfahren nach einem der Ansprüche 1 bis 4, **dadurch gekennzeichnet, dass** das Fluid in dem Kanal (24) ruht, solange die Kanalwand (26) intakt ist.

6. Verfahren nach einem der Ansprüche 1 bis 4, **dadurch gekennzeichnet, dass** das Fluid den Kanal (24) durchströmt, während die Kanalwand (26) intakt ist.

7. Verfahren nach Anspruch 6, **dadurch gekennzeichnet, dass** das Fluid eine Temperatur besitzt, die von einer Temperatur der Batterie (14), insbesondere der Batteriezelle (16), abweicht, vorzugsweise um wenigstens 15 K.

8. Verfahren nach einem der Ansprüche 1 bis 7, **dadurch gekennzeichnet, dass** das Fluid ein Gas, insbesondere Kohlendioxid, Argon oder Stickstoff, ist.

9. Verfahren nach einem der Ansprüche 1 bis 7, **dadurch gekennzeichnet, dass** das Fluid eine Flüssigkeit, insbesondere Wasser, ist.

10. Brandschutzvorrichtung (34) für ein Elektrofahrzeug (12) mit einer Batterie (14), wobei die Batterie (14) wenigstens eine in einem Aufnahmeraum (18) angeordnete Batteriezelle (16) und wenigstens einen Kanal (24) aufweist, wobei eine Kanalwand (26), in der wenigstens ein Berstbereich (28) ausgebildet ist, den Kanal (24) und den Aufnahmeraum (18) voneinander trennt,
wobei die Brandschutzvorrichtung (34) folgendes aufweist:
- eine Fluidversorgungseinrichtung (40), die dazu eingerichtet ist, den Kanal (24) mit unter Druck stehendem Fluid zu versorgen,
- eine Steuereinrichtung (46), die dazu eingerichtet ist, das Zuführen von elektrischer Energie von einer Ladevorrichtung (30) zu der Batterie (14) in Abhängigkeit von einem Druck und/oder einer Druckänderung des Fluids in dem Kanal (24) zu gestatten oder zu unterbinden,
und wobei die Brandschutzvorrichtung (34) dazu eingerichtet ist, bei einem Abfall des Drucks in dem Kanal (24) Fluid in den Kanal (24) nach zu fördern.

11. Brandschutzvorrichtung (34) nach Anspruch 10, weiterhin aufweisend wenigstens einen Vorratsbehälter (54; 54a-54c, 72) für das Fluid.

12. Brandschutzvorrichtung (34) nach Anspruch 10 oder 11, weiterhin aufweisend einen Wärmetauscher (70) zum Kühlen und/oder Erwärmen des Fluids.

13. Brandschutzvorrichtung (34) nach einem der Ansprüche 10 bis 12, weiterhin aufweisend eine Kommunikationseinrichtung (48) zum Kommunizieren mit der Ladevorrichtung (30), einer Brandmeldezentrale und/oder einem Endgerät eines Nutzers des Elektrofahrzeugs (12).

14. Ladestation (10), aufweisend eine Brandschutzvorrichtung (34) nach einem der Ansprüche 10 bis 13 und eine Ladevorrichtung (30) zum Zuführen von elektrischer Energie zu der Batterie (14).

15. Ladestation (10) nach Anspruch 14, **dadurch gekennzeichnet, dass** ein kombinierter Lade- und Fluidstecker (38) zum elektrischen Verbinden der Ladevorrichtung (30) mit der Batterie (14) und zum Versorgen des Kanals (24) mit dem unter Druck stehenden Fluid vorgesehen ist.

## Claims

1. A method for charging a battery (14) of an electric vehicle (12), wherein the battery (14) has at least one battery cell (16) disposed in a receiving space (18) and at least one channel (24), wherein a channel wall (26), in which at least one burst region (28) is formed, separates the channel (24) and the receiving space (18) from one another,
wherein electrical energy is supplied to the battery (14) while the channel (24) is filled with a pressurized fluid,
wherein extra fluid is supplied into the channel (24) when the pressure in the channel (24) drops as a result of the burst region (28) bursting,
and wherein the supply of electrical energy to the battery (14) is terminated when the pressure in the channel (24) drops.

2. The method according to claim 1, **characterized in that** an alarm is triggered when the pressure in the channel (24) drops.

3. The method according to any of the preceding claims, **characterized in that** the pressure of the fluid in the channel (24) is increased when a temperature of the battery (14) or of the at least one battery cell (16) rises.

4. The method according to any of the preceding claims, **characterized in that** the extra fluid supplied is a different fluid.

5. The method according to any of claims 1 to 4, **characterized in that** the fluid is at rest in the channel (24) as long as the channel wall (26) is intact.

6. The method according to any of claims 1 to 4, **characterized in that** the fluid flows through the channel (24) while the channel wall (26) is intact.

7. The method according to claim 6, **characterized in that** the fluid has a temperature which deviates from a temperature of the battery (14), in particular of the battery cell (16), preferably by at least 15 K.

8. The method according to any of claims 1 to 7, **characterized in that** the fluid is a gas, in particular carbon dioxide, argon or nitrogen.

9. The method according to any of claims 1 to 7, **characterized in that** the fluid is a liquid, in particular water.

10. A fire protection device (34) for an electric vehicle (12) having a battery (14), wherein the battery (14) has at least one battery cell (16) disposed in a receiving space (18) and at least one channel (24), wherein a channel wall (26), in which at least one burst region (28) is formed, separates the channel (24) and the receiving space (18) from one another,
wherein the fire protection device (34) has:
- a fluid supply device (40) which is configured to supply the channel (24) with pressurized fluid,
- a controller (46) which is configured to allow or prevent the supply of electrical energy from a charging device (30) to the battery (14) depending on a pressure and/or a change in the pressure of the fluid in the channel (24),
and wherein the fire protection device (34) is configured to supply extra fluid into the channel (24) when the pressure in the channel (24) drops.

11. The fire protection device (34) according to claim 10, further having at least one storage container (54; 54a-54c, 72) for the fluid.

12. The fire protection device (34) according to claim 10 or claim 11, further having a heat exchanger (70) for cooling and/or heating the fluid.

13. The fire protection device (34) according to any of claims 10 to 12, further having a communication device (48) for communicating with the charging device (30), a central fire alarm system, and/or a terminal of a user of the electric vehicle (12).

14. A charging station (10) having a fire protection device (34) according to any of claims 10 to 13 and a charging device (30) for supplying electrical energy to the battery (14).

15. The charging station (10) according to claim 14, **characterized in that** a combined charging and fluid plug (38) is provided for electrically connecting the charging device (30) to the battery (14) and for supplying the channel (24) with the pressurized fluid.

## Revendications

1. Procédé de charge d'une batterie (14) d'un véhicule électrique (12), ladite batterie (14) comprenant au moins une cellule de batterie (16) agencée dans un compartiment de réception (18) et au moins un canal (24), une paroi de canal (26) dans laquelle au moins une zone d'éclatement (28) est formée séparant le canal (24) et l'espace de réception (18) l'un de l'autre,
de l'énergie électrique étant fournie à la batterie (14) tandis que le canal (24) est rempli d'un fluide sous pression,
en cas de chute de pression dans le canal (24) à la suite d'un éclatement de la zone d'éclatement (28), du fluide étant acheminé dans le canal (24),
et en cas de chute de pression dans le canal (24), l'alimentation en énergie électrique de la batterie (14) étant interrompue.

2. Procédé selon la revendication 1, **caractérisé en ce qu'**une alarme est déclenchée en cas de chute de pression dans le canal (24).

3. Procédé selon l'une quelconque des revendications précédentes, **caractérisé en ce que** la pression du fluide dans le canal (24) est augmentée lorsqu'une température de la batterie (14) ou de la au moins une cellule de batterie (16) augmente.

4. Procédé selon l'une quelconque des revendications précédentes, **caractérisé en ce que** le fluide acheminé ultérieurement est un autre fluide.

5. Procédé selon l'une quelconque des revendications 1 à 4, **caractérisé en ce que** le fluide réside dans le canal (24) tant que la paroi du canal (26) est intacte.

6. Procédé selon l'une quelconque des revendications 1 à 4, **caractérisé en ce que** le fluide s'écoule à travers le canal (24) tandis que la paroi de canal (26) est intacte.

7. Procédé selon la revendication 6, **caractérisé en ce que** le fluide présente une température qui diffère d'une température de la batterie (14), en particulier de la cellule de batterie (16), de préférence d'au moins 15 K.

8. Procédé selon l'une quelconque des revendications 1 à 7, **caractérisé en ce que** le fluide est un gaz, en particulier du dioxyde de carbone, de l'argon ou de l'azote.

9. Procédé selon l'une quelconque des revendications 1 à 7, **caractérisé en ce que** le fluide est un liquide, en particulier de l'eau.

10. Dispositif anti-incendie (34) pour un véhicule électrique (12) avec une batterie (14), la batterie (14) comprenant au moins une cellule de batterie (16) agencée dans un espace de réception (18) et au moins un canal (24), une paroi de canal (26) dans laquelle au moins une zone d'éclatement (28) est formée séparant le canal (24) et l'espace de réception (18),
le dispositif anti-incendie (34) présentant les éléments ci-dessous :
- un dispositif d'alimentation en fluide (40) conçu pour alimenter le canal (24) en fluide sous pression,
- un dispositif de commande (46) qui est conçu pour permettre ou interdire l'alimentation en énergie électrique depuis un dispositif de charge (30) vers la batterie (14) en fonction d'une pression et/ou d'une variation de pression du fluide dans le canal (24),
et le dispositif anti-incendie (34) étant conçu pour refouler du fluide dans le canal (24) en cas de chute de pression dans le canal (24).

11. Dispositif anti-incendie (34) selon la revendication 10, comprenant en outre au moins un réservoir de stockage (54 ; 54a-54c, 72) pour le fluide.

12. Dispositif anti-incendie (34) selon la revendication 10 ou 11, comprenant en outre un échangeur de chaleur (70) pour refroidir et/ou chauffer le fluide.

13. Dispositif anti-incendie (34) selon l'une quelconque des revendications 10 à 12, comprenant en outre un dispositif de communication (48) pour communiquer avec le dispositif de charge (30), une centrale d'alarme incendie et/ou un terminal d'un utilisateur du véhicule électrique (12).

14. Station de charge (10), comprenant un dispositif anti-incendie (34) selon l'une quelconque des revendications 10 à 13 et un dispositif de charge (30) pour fournir de l'énergie électrique à la batterie (14).

15. Station de charge (10) selon la revendication 14, **caractérisée en ce qu'**un connecteur de charge et de fluide combiné (38) est prévu pour connecter électriquement le dispositif de charge (30) à la batterie (14) et pour alimenter le canal (24) en fluide sous pression.
